# EUROPEAN PATENT APPLICATION

(11) **EP 4 484 583 A1**
(43) Date of publication of application: **01.01.2025**
(21) Application number: 23181440.1
(22) Date of filing: 26.06.2023
(51) Int. Cl.: C21D 1/06, C21D 1/18, C21D 1/26, C21D 8/00, C21D 9/18, C21D 6/00, C21D 9/24, B23K 26/38, A01G 3/053, A01G 3/025

(54) **A METHOD OF MANUFACTURING BLADES OF A CUTTING DEVICE**

(71) Applicant: Husqvarna AB, 561 82 Huskvarna (SE)
(72) Inventor: Stoelzle, Bernd, 89077 Ulm (DE); Ebeling, Stefan, 73463 Westhausen (DE); Baur, Günter, 89073 Ulm (DE)
(74) Representative: Finkele, Rolf

(57) **Abstract**

A method **(200)** of manufacturing a blade **(130, 140, 310, 320, 440, 450)** includes a laser cutting of the blade **(130, 140, 310, 320, 440, 450)** from a sheet metal with a first hardness such that edges **(150, 160, 330, 460, 470)** of the blade **(130, 140, 310, 320, 440, 450)** after laser cutting have a localized hardness greater than the first hardness. The method **(200)** is characterized in that the laser cutting of the blade **(130, 140, 310, 320, 440, 450)** is followed by a heat treatment process such that the edges **(150, 160, 330, 460, 470)** of the blade **(130, 140, 310, 320, 440, 450)** have a second hardness. The second hardness is lesser than the localized hardness.

## Description

### TECHNICAL FIELD

The present disclosure relates to a cutting device with two blades, and more particularly to a method of manufacturing a blade of the cutting device.

### BACKGROUND

A cutting device, such as hedge trimmers, secateurs, garden shears, pole pruners, and scissors, may be used for a variety of gardening operations such as cutting, pruning, trimming, and shearing of hedges, shrubs, plants, and the like. The cutting device may include two blades which may move relative to one another. One of the two blades may be a cutting blade and the other blade may be an ambos/ anvil blade. Further, the blades may be manufactured from sheet metal by laser cutting. The laser cutting may automatically result in some sort of heat treatment of the blades near edges of the blades and may result in hardening of the blades at the edges.

During operation of the cutting device, when the cutting blade may move relative to the ambos blade, the ambos blade may cause wear in the cutting blade such that the grinded edges of the cutting blade may wear-off, and the performance of the cutting device may gradually reduce. To substantially prevent the wear-off of the cutting blade, the laser cutting may be followed by a grinding process for grinding away the hardened edges of the cutting blade and/ or the ambos blade. The hardness of the edges of the cutting blade and/ or the ambos blade may then partially reduce and inch closer in value to the original hardness of the sheet metal (which is softer than the hardness automatically produced during the laser cutting). However, the grinding process for the cutting blade and/ or the ambos blade may be a time-consuming, cumbersome, and expensive process. Hence, an improved, easy, and cost-effective method to manufacture the ambos blade, or both blades in general of the cutting device may be desired that may increase the life of the blades of the cutting device.

An example of a cutting device is provided in European Patent Application EP 4,026,420 A1 (hereinafter referred to as '420 reference). The '420 reference provides a cutting device with a first blade and a second blade. The first blade is made by thermal cutting, particularly laser cutting, while the second blade is made by shearing-type processing. The first blade and the second blade after undergoing laser cutting and the shearing-type processing respectively may be subjected to further processing, e.g., sharpening, plane processing, deburring, levelling, cleaning/rust prevention, etc.

### SUMMARY OF THE INVENTION

In view of the above, it is an objective of the present invention to solve or at least reduce the drawbacks discussed above. The objective is at least partially achieved by a method of manufacturing a blade.

According to an aspect of the present invention, the method of manufacturing a blade includes a laser cutting of the blade from a sheet metal with a first hardness such that edges of the blade after laser cutting have a localized hardness greater than the first hardness. The method is characterized in that the laser cutting of the blade is followed by a heat treatment process such that the edges of the blade have a second hardness. The second hardness is lesser than the localized hardness.

Thus, the present disclosure provides an improved method of manufacturing a blade. The method may ensure a longer blade life due to lesser probability of wear of the blade. The method may provide the blade with softer edges, or the edges with hardness approximately similar to the hardness of the sheet metal from which the blade may be manufactured. The method may be quick, reliable, cost-effective, and energy efficient.

The first hardness according to the present invention may denote the hardness of the sheet metal from which the blade may be manufactured. Further, the localized hardness according to the present invention may denote the hardness of localized area near the laser cut edges of the blade. Further, the second hardness according to the present invention may denote the hardness of localized area near the edges of the blade after the heat treatment process.

According to an exemplary embodiment of the invention, laser light beam in the laser cutting may be produced by a suitable laser light source such as a carbon dioxide laser, neodymium yttrium-aluminum-garnet laser, and fiber-optic laser.

According to an exemplary embodiment of the invention, the temperature of the heat treatment process is less than 400°C, preferably 375°C. The heat treatment process may be used to alter the microstructure of the blade, which may be manufactured from sheet metal. The heat treatment process may improve the working life of the blade. The heat treatment process of the blade at 375°C may substantially reduce the hardness of the blade, particularly the hardness of the edges of the blade that may increase due to laser cutting. The heat treatment process may reduce the hardness of the edges of the blade from the localized hardness to the second hardness. In other words, the heat treatment process may warm up the blade and soften the hardness of the blade, particularly blade edges.

According to an exemplary embodiment of the invention, the heat treatment process may be limited towards the area at or around the localized area where the hardness increases after the laser cutting. According to an exemplary embodiment of the invention, the heat treatment process may be processed on the complete blade.

According to an exemplary embodiment of the invention, duration of the heat treatment process is at least 1.5 hours, preferably 3 hours. The blade may be subjected to the preferred temperature of 375°C for 3 hours such that the edges of the blade may soften and the hardness of the edges of the blade that may increase due to laser cutting may substantially reduce thereafter.
According to an exemplary embodiment of the invention, the localized hardness is in the range of 58-61 HRC. In one particular embodiment it is 59.5 HRC. In this respect one can in an embodiment expect the second hardness to be in the range of 53-55 HRC. Whereby in a particular embodiment the secondary hardness is 54.4 HRC.

The heat treatment process may substantially reduce the hardness of the edges of the blade from the localized hardness to the second hardness. The heat treatment process may eliminate the need of grinding of the hardened edges of the blade, which may otherwise be a cumbersome, and expensive process.

According to a further aspect of the present invention, a cutting device employs two blades that move relative to each other. At least one blade of the two blades may be manufactured via the laser cutting followed by the heat treatment process such that the temperature of the heat treatment process is less than 400°C, preferably 375°C and the duration of the heat treatment process is at least 1.5 hours, preferably 3 hours. The cutting device with two blades may find applications in gardening, kitchen, art and craft, amongst other applications.

According to an exemplary embodiment of the invention, the two blades of the cutting device are coupled to each other using a plurality of fasteners, an upper bracket, and a lower bracket. Further, a plurality of spacers may be provided between the two blades, and/ or the blade and the upper bracket, and/ or the blade and the lower bracket. The plurality of spacers may prevent friction between the blades, and/ or the blade and the upper bracket, and/ or the blade and the lower bracket as per the arrangement of the plurality of spacers.

According to an exemplary embodiment of the invention, both blades of the cutting device may be manufactured by laser cutting followed by the heat treatment process such as to get a long-lasting performance of the cutting device.

According to an exemplary embodiment of the invention, one blade is fixed, and the other blade is movable. The movable blade may be a cutting blade. Further, the fixed blade may be an anvil or ambos blade and may provide flat surface to support cutting, for example, of hedges, shrubs, etc., by the cutting blade. The cutting blade may close against the flat surface of the anvil or ambos blade.

According to an exemplary embodiment of the invention, at least one movable blade performs a pivotable movement. The at least one blade may be movable to perform an anvil-type cutting, or the bypass type cutting. For example, the cutting device may be a secateurs having a pair of pivoted handles and may have a single movable cutting blade that closes against a flat surface to perform the anvil-type cutting.

According to an exemplary embodiment of the invention, at least one movable blade performs a linear movement. The at least one movable blade may perform a reciprocating, or oscillating type movement to allow the cutting device to perform the cutting of hedges, shrubs, plants, and the like. The at least one blade may be movable using the power of a motor, an engine, or any other propulsion means.

According to an exemplary embodiment of the invention, the cutting device is a hedge trimmer. The hedge trimmer is a gardening tool that may be used for trimming (cutting, pruning) hedges or solitary shrubs (bushes). The hedge trimmer may be a portable and hand-held cutting device. The hedge trimmer may be powered by a drive source, such as the motor, or the engine.

According to an exemplary embodiment of the invention, the cutting device is scissors. The scissors may support bypass cutting such that two cutting blades of the scissors may move to an overlapping position while performing cutting action. The scissors may be manual, or electrically powered scissors. It is obvious to the one skilled in the art that there may be other possible embodiments that exhibit a cutting arrangement similar to the scissors, such as, with secateurs or shears, in particular garden shears.

Before discussing the invention with the help of the drawings the invention will be briefly discussed in general. A method is developed for manufacturing at least one blade of a cutting device that employs two blades. The at least one blade may be manufactured by laser cutting of the at least one blade from sheet metal. After the laser cutting, the at least one blade may be heat treated up to 375° C for a time span of 1.5 to 3 hours in a heating oven. The heat treatment may be more of a warming up process and not at all a hardening process. The warming up process may result in softening of the hardness, in particular any local hardness arising from laser cutting, of the at least one blade.

The method according to the present invention may ensure a long-lasting blade performance with good cutting edges. The method according to the present invention may allow avoidance of a significant wear-off process of the at least one blade manufactured by the method of this invention without any need for expensive scraping off of the laser cut edges.

According to an exemplary embodiment of the invention, the method for manufacturing at least one blade of the cutting device may involve laser cutting followed by the heat treatment. The hardness difference over the whole at least one blade manufactured by the method of the invention may not be more than 3 HRC.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a hedge trimmer, in accordance with an exemplary embodiment of the present disclosure;
**FIG. 2** illustrates a perspective view of a blade of a hedge trimmer, in accordance with an exemplary embodiment of the present disclosure;
**FIG. 3** illustrates a flowchart of a method for manufacturing a blade of a cutting device, in accordance with an exemplary embodiment of the present disclosure;
**FIG. 4** illustrates an exploded view of an elongate cutter of a hedge trimmer, in accordance with an exemplary embodiment of the present disclosure;
**FIG. 5** illustrates an assembled view of an elongate cutter of a hedge trimmer, in accordance with an exemplary embodiment of the present disclosure;
**FIG. 6** illustrates a perspective view of a scissors, in accordance with an exemplary embodiment of the present disclosure; and
**FIG. 7** illustrates a perspective view of a pole pruner, in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

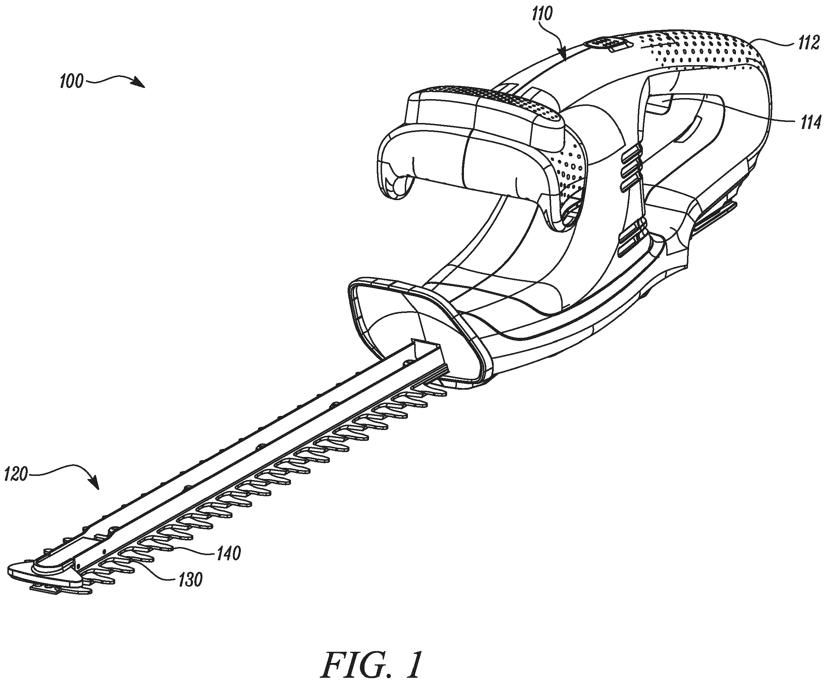

**FIG. 1** illustrates a perspective view of a cutting device **100.** The cutting device **100** in **FIG.** 1 is illustrated as a hedge trimmer. The hedge trimmer includes a body **110.** The body **110** includes a handle **112** that allows a user to hold the hedge trimmer. The handle **112** further includes a power switch **114** to selectively actuate the hedge trimmer. Further, the body **110** houses a drive system (not shown) that includes a drive source and a transmission mechanism. The drive system is configured to drive an elongate cutter **120.** The drive system is mechanically engaged with the elongate cutter **120.** The elongate cutter **120** includes two blades **130, 140.** In other words, the cutting device **100** employs two blades **130, 140** that move relative to each other. The two blades **130, 140** have an identical geometry. The blade **130** will be described in detail below and the same description will hold true for the blade **140** as well.

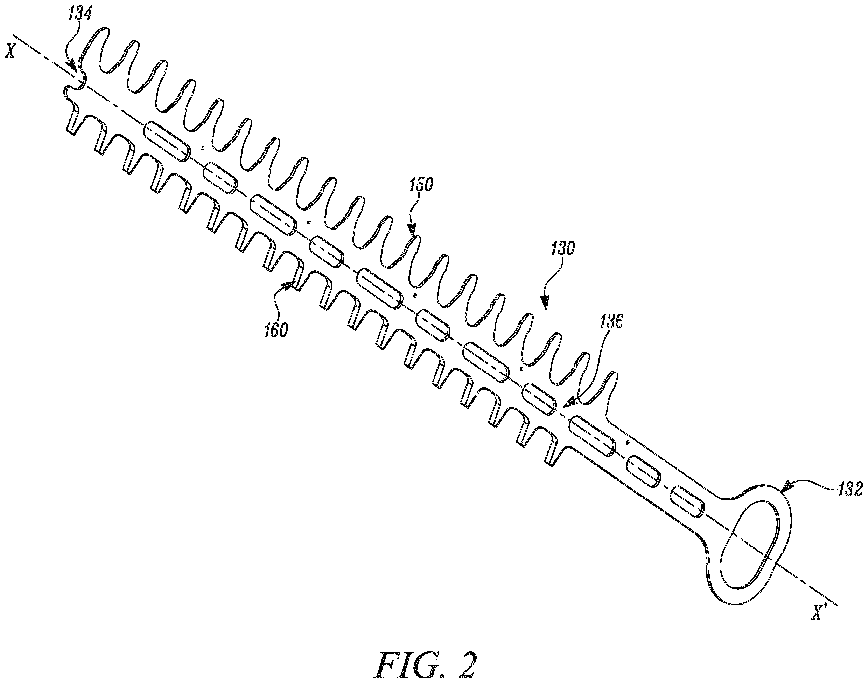

**FIG. 2** illustrates a perspective view of the blade **130.** The blade **130** is manufactured using a sheet metal with first hardness by laser cutting of the sheet metal. The blade **130** formed by the laser cutting further undergoes a heat treatment process. The blade **130** has a first end **132** and a second end **134.** The first end **132** is disposed opposite to the second end **134.** The first end **132** is a mounting end or a driving end, which is configured to be mechanically engaged to the drive system. The second end **134** is a free end, arranged remote from the body **110** of the hedge trimmer. The first end **132** and the second end **134** are separated by an elongate portion **136.** The elongate portion **136** extends along a length of the blade **130.** The elongate portion **136** is defined along a longitudinal axis **X-X'.** The elongate portion **136** includes edges **150** and edges **160** such that the edges **150** are disposed on one side of the longitudinal axis **X-X'** and the edges **160** are disposed on opposite side of the longitudinal axis **X-X'.**

Further, the edges **150** are different in geometry and characteristics to the edges **160.** The edges **150** are ambos edges of the blade **130,** and the edges **160** are the cutting edges of the blade **130.** The cutting edges perform the cutting action while the ambos edges do not perform the cutting action. The ambos edges provide a surface to support or hold a cutting element while the cutting edges perform the cutting action. The edges **150** have a larger dimension than the edges **160.** Both the edges **150, 160** have a plurality of teeth respectively.

Further, the laser cutting of the sheet metal to manufacture the blade **130** results in a localized hardness of the edges **150, 160** of the blade **130** after laser cutting such that the localized hardness is greater than the first hardness. The edges **160** are grinded such that there might not be any residual localized hardness anymore at the edges **160.**

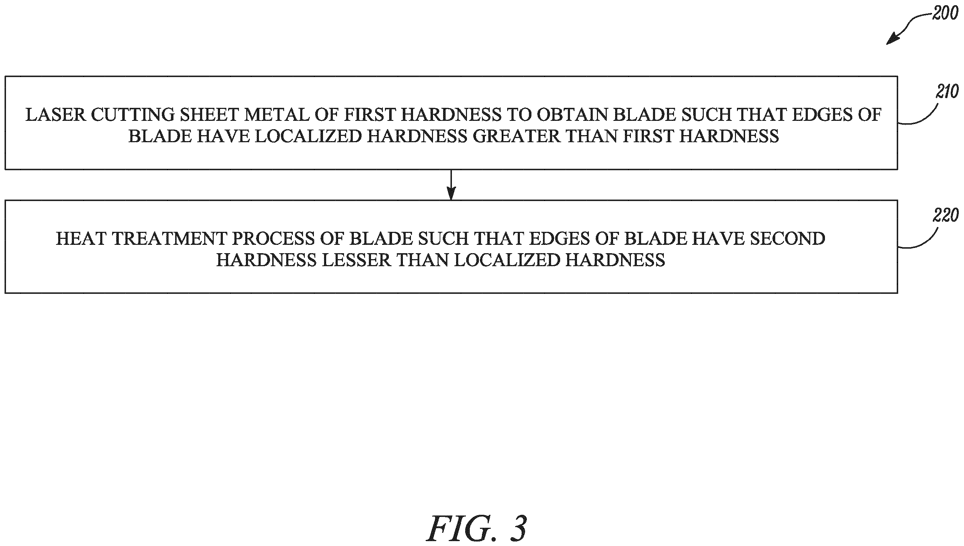

**FIG. 3** illustrates a flowchart of a method **200** for manufacturing at least one of the two blades **130, 140.** The at least one of the two blades **130, 140** is manufactured using the sheet metal by employing the method **200.** For understanding of the present invention, the blade **130** is assumed to be manufactured using the sheet metal by employing the method **200.** The method **200** for manufacturing of the blade **130** includes step **210.** Step **210** includes the laser cutting of the blade **130** from the sheet metal with the first hardness such that the edges **150, 160** of the blade **130** after laser cutting have the localized hardness greater than the first hardness. The method **200** of manufacturing the blade **130** further includes step **220.** Step **220** includes following the laser cutting of the blade **130** by a heat treatment process such that the edges **150, 160** of the blade **130** have a second hardness. The second hardness is lesser than the localized hardness resulting from the original laser cutting. The temperature of the heat treatment process is less than 400°C, preferably 375°C. Further, duration of the heat treatment process is at least 1.5 hours, preferably 3 hours. Further with this exemplary embodiment, the localized hardness after the laser cutting is 59.5 HRC and the second hardness after the heat treatment process is 54.4 HRC.

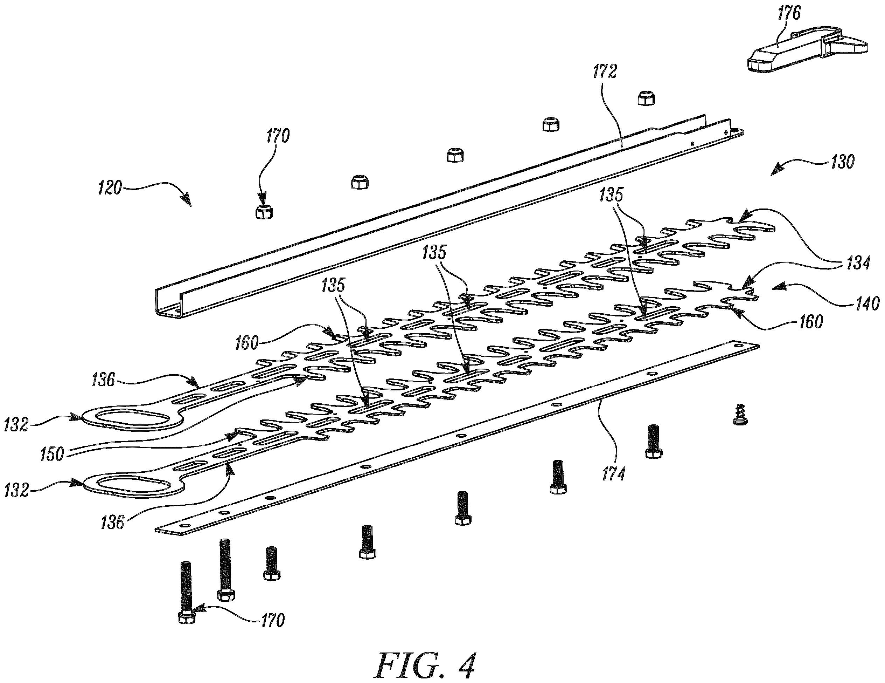

**FIG. 4** illustrates an exploded view of the elongate cutter **120.** The elongate cutter **120** includes the two blades **130, 140.** The blade **130** as well as the blade **140** includes the first end **132,** which is the mounting end or the driving end configured to be mechanically engaged to the drive system. Further, the blade **130** as well as the blade **140** includes the second end **134.** The blade **130** lies above the blade **140** during an assembly of the elongate cutter **120.** The blade **140** is rotated **180°** relative to the blade **130** during the assembly of the elongate cutter **120** such that each of the edges **160** of the blade **130** are between each of the two consecutive edges **150** of the blade **140.** Further, each of the edges **150** of the blade **130** are between each of the two consecutive edges **160** of the blade **140.**

Further, the blade **130** and the blade **140** respectively includes the elongate portion **136.** The elongate portion **136** of each of the blade **130** and the blade **140** includes a plurality of holes **135** to allow coupling of the blade **130** and the blade **140** using a plurality of fastener sets **170** (including screws, washers, and nuts), an upper bracket **172,** and a lower bracket **174.** The upper bracket **172,** and the lower bracket **174** mechanically couples the two blades **130, 140** in a removably manner using a plurality of fastener sets **170.** Further, the second end **134** of the blade **130** is covered using a side bracket **176** using one of the plurality of fastener sets **170.**

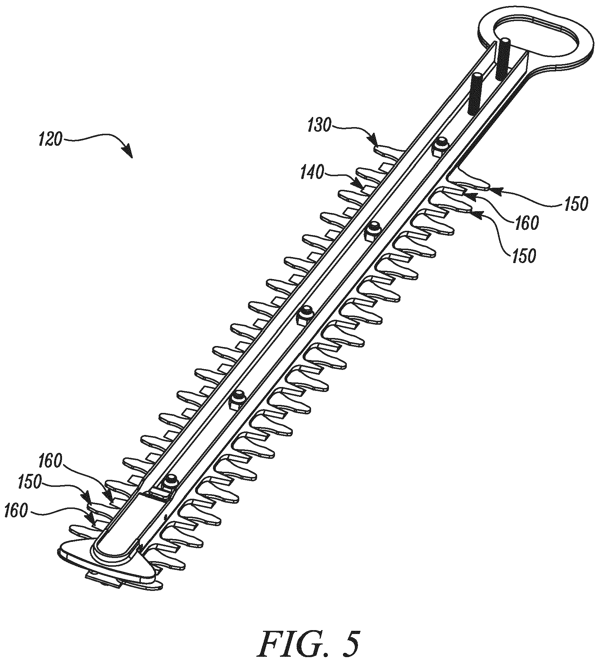

**FIG. 5** illustrates an assembled view of the elongate cutter **120** of the hedge trimmer such that the blade **130** lies above the blade **140.** Further, the blade **140** is rotated **180**° relative to the blade **130** such that each of the edges **160** of the blade **130** are between each of the two consecutive edges **150** of the blade **140.** Further, each of the edges **150** of the blade **130** are between each of the two consecutive edges **160** of the blade **140.** In such an arrangement of the elongate cutter **120,** the two blades **130, 140** move relative to each other and the at least one of the two blades **130, 140** perform a linear movement, or a reciprocating movement, or an oscillating movement.

Further, in another embodiment, one blade **130, 140** out of the two blades **130, 140** is fixed and the other blade **130, 140** is movable such that at least one movable blade **130, 140** performs the linear movement.

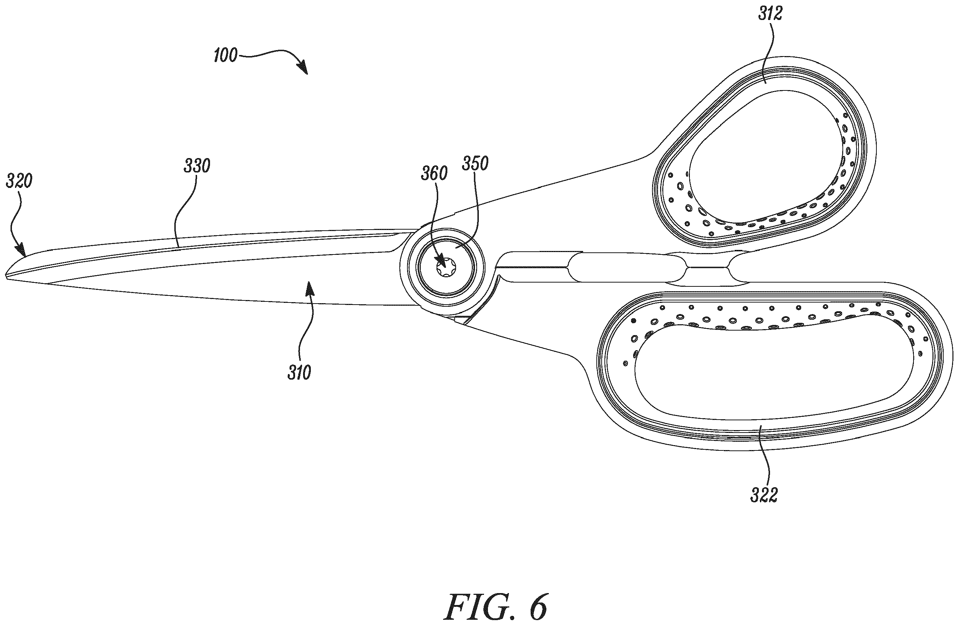

**FIG. 6** illustrates a perspective view of another cutting device **100.** The cutting device **100** in **FIG. 6** is illustrated as a scissors in a closed state. The scissors includes two blades **310, 320.** In other words, the cutting device **100** employs the two blades **310, 320** that move relative to each other. The blade 310 has a first edge **330** and the blade **320** has a second edge (not shown). The two blades **310, 320** are coupled using a coupler **350** along a pivot point **360.** Further, the scissors include gripping portions **312, 322** to grip the two blades **310, 320** respectively.

In another embodiment, one blade **310, 320** out of the two blades **310, 320** is fixed and the other blade **310, 320** is movable such that at least one movable blade **310, 320** performs a pivotal movement along the pivot point **360.**

Further, at least one of the two blades **310, 320** is manufactured using the sheet metal by employing the method **200.** For understanding of the present invention, the blade **310** is assumed to be manufactured using the sheet metal by employing the method **200.** The method **200** for manufacturing the blade **310** includes step **210.** Step **210** includes the laser cutting of the blade **310** from the sheet metal with the first hardness such that the edge **330** of the blade **310** after laser cutting has the localized hardness greater than the first hardness. The method **200** for manufacturing of the blade **310** further includes step **220.** Step **220** includes following the laser cutting of the blade **310** by the heat treatment process such that the edge **330** of the blade **310** have the second hardness. The second hardness is lesser than the localized hardness resulting from the original laser cutting. The temperature of the heat treatment process is less than 400°C, preferably 375°C. Further, duration of the heat treatment process is at least 1.5 hours, preferably 3 hours. Further with this exemplary embodiment, the localized hardness after the laser cutting is 59.5 HRC and the second hardness after the heat treatment process is 54.4 HRC.

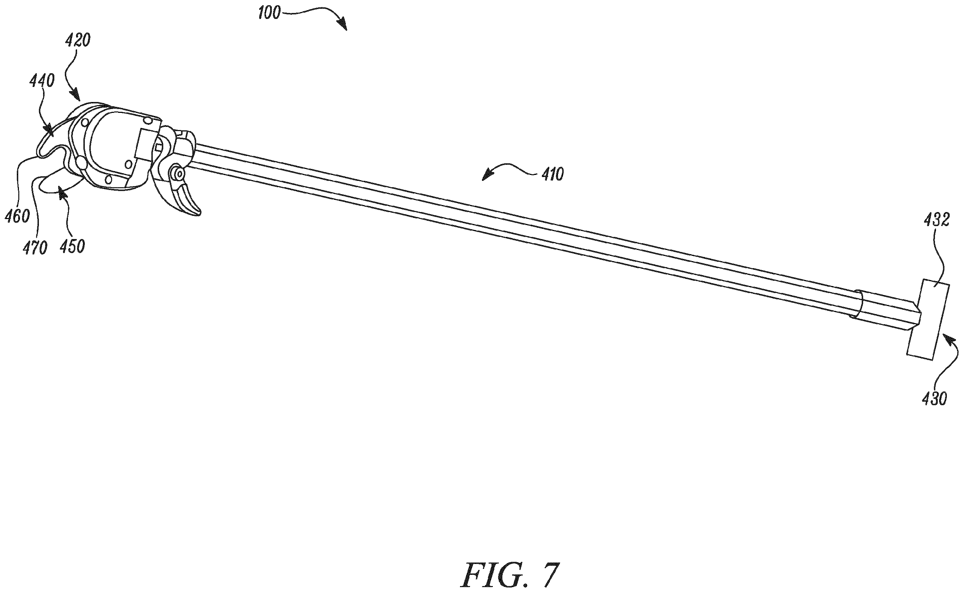

**FIG. 7** illustrates a perspective view of yet another cutting device **100.** The cutting device **100** in **FIG. 7** is illustrated as a pole pruner. The pole pruner includes a longitudinal member **410** having a first end **420** and a second end **430.** The pole pruner includes two blades **440, 450** coupled to the longitudinal member **410** towards the first end **420.** Further, the pole pruner includes a handle **432** coupled to the longitudinal member **410** towards the second end **430** such that the movement of the handle **432** away and towards the second end **430** effects the movement of the two blades **440, 450.** The two blades **440, 450** move away from each other when the handle **432** moves away from the second end **430** and the two blades **440, 450** move towards each other when the handle **432** moves towards the second end **430.** In other words, the cutting device **100** employs the two blades **440, 450** that move relative to each other. Further, the two blades **440, 450** includes the edges **460, 470** respectively.

In another embodiment, one blade **440, 450** out of the two blades **440, 450** is fixed and the other blade **440, 450** is movable such that at least one movable blade **440, 450** performs the pivotal movement.

Further, at least one of the two blades **440, 450** is manufactured using the sheet metal by employing the method **200.** For understanding of the present invention, the blade **440** is assumed to be manufactured using the sheet metal by employing the method **200.** The method **200** for manufacturing the blade **440** includes step **210.** Step **210** includes the laser cutting of the blade **440** from the sheet metal with the first hardness such that the edge **460** of the blade **440** after laser cutting has the localized hardness greater than the first hardness. The method **200** for manufacturing the blade **440** further includes step **220.** Step **220** includes following the laser cutting of the blade **440** by the heat treatment process such that the edge **460** of the blade **440** has the second hardness. The second hardness is lesser than the localized hardness resulting from the original laser cutting. The temperature of the heat treatment process is less than 400°C, preferably 375°C. Further, duration of the heat treatment process is at least 1.5 hours, preferably 3 hours. Further with this exemplary embodiment, the localized hardness after the laser cutting is 59.5 HRC and the second hardness after the heat treatment process is 54.4 HRC.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Device
- **110**: Body
- **112**: Handle
- **114**: Power Switch
- **120**: Elongate Cutter
- **130**: Blade
- **132**: First End
- **134**: Second End
- **135**: Holes
- **136**: Elongate Portion
- **140**: Blade
- **150**: Edges
- **160**: Edges
- **170**: Fastener sets
- **172**: Upper Bracket
- **174**: Lower Bracket
- **176**: Side Bracket
- **200**: Method
- **210**: Step
- **220**: Step
- **310**: Blade
- **312**: Gripping Portion
- **320**: Blade
- **322**: Gripping Portion
- **330**: First Edge
- **350**: Coupler
- **360**: Pivot Point
- **410**: Longitudinal Member
- **420**: First End
- **430**: Second End
- **432**: Handle
- **440**: Blade
- **450**: Blade
- **460**: Edges
- **470**: Edges
- **X-X'**: Longitudinal Axis

## Claims

1. A method **(200)** of manufacturing a blade **(130, 140, 310, 320, 440, 450),** comprising:
a laser cutting of the blade **(130, 140, 310, 320, 440, 450)** from a sheet metal with a first hardness, wherein edges **(150, 160, 330, 460, 470)** of the blade **(130, 140, 310, 320, 440, 450)** after laser cutting have a localized hardness greater than the first hardness;
**characterized in that:**
the laser cutting of the blade **(130, 140, 310, 320, 440, 450)** is followed by a heat treatment process such that the edges **(150, 160, 330, 460, 470)** of the blade **(130, 140, 310, 320, 440, 450)** have a second hardness, wherein the second hardness is lesser than the localized hardness.

2. The method **(200)** according to claim **1,** wherein temperature of the heat treatment process is less than **400**°C, preferably **375**°C.

3. The method **(200)** according to any of the claims **1** or **2,** wherein duration of the heat treatment process is at least **1.5** hours, preferably **3** hours.

4. The method **(200)** according to claim **1,** wherein the localized hardness is in the range of 58-61 HRC.

5. The method **(200)** according to claim **4,** wherein the second hardness is the range of **53-55** HRC.

6. A cutting device **(100)** employing two blades **(130, 140, 310, 320, 440, 450)** that move relative to each other with at least one blade **(130, 140, 310, 320, 440, 450)** manufactured using the method **(200)** of claims **1-5.**

7. The cutting device **(100)** according to claim **6,** wherein one blade **(130, 140, 310, 320, 440, 450)** is fixed, and the other blade **(130, 140, 310, 320, 440, 450)** is movable.

8. The cutting device **(100)** according to claim **7,** wherein at least one movable blade **(310, 320, 440, 450)** performs a pivotable movement.

9. The cutting device **(100)** according to claim **7,** wherein at least one movable blade **(130, 140)** performs a linear movement.

10. The cutting device **(100)** according to any of the claims **7** or **9,** wherein the cutting device **(100)** is a hedge trimmer.

11. The cutting device **(100)** according to any of the claims **7** or **8,** wherein the cutting device **(100)** is scissors.

## Amended claims

### Amended claims in accordance with Rule 137(2) EPC.

1. A method **(200)** of manufacturing a blade **(130, 140, 310, 320, 440, 450),** comprising:
a laser cutting of the blade **(130, 140, 310, 320, 440, 450)** from a sheet metal with a first hardness, wherein edges **(150, 160, 330, 460, 470)** of the blade **(130, 140, 310, 320, 440, 450)** after laser cutting have a localized hardness greater than the first hardness,
with the laser cutting of the blade **(130, 140, 310, 320, 440, 450)** is followed by a heat treatment process such that the edges **(150, 160, 330, 460, 470)** of the blade **(130, 140, 310, 320, 440, 450)** have a second hardness, **characterized in that:**
the second hardness is lesser than the localized hardness,
and the heat treatment is more of a warming up process and not at all a hardening process,
wherein the blade is heat treated up to **400**°C, preferably **375**°C,
and wherein the duration of the heat treatment process is at least **1.5** hours, preferably **3** hours.

2. The method **(200)** according to claim **1**, wherein the localized hardness is in the range of 58-61 HRC.

3. The method **(200)** according to claim **2**, wherein the second hardness is the range of **53-55** HRC.

4. A cutting device **(100)** employing two blades **(130, 140, 310, 320, 440, 450)** that move relative to each other using the method of any one of claims 1-3, with one blade **(130, 140, 310, 320, 440, 450)** forming an edge **(150)** by laser cutting from a sheet metal and thus provides a surface to support or hold a cutting element while a cutting edge **(160)** of the other blade **(130, 140, 310, 320, 440, 450)** performs the cutting action,
**characterized in that**,
the hardness difference over the whole of the at least one blade **(130, 140, 310, 320, 440, 450)** is not more than 3 HRC.

5. The cutting device **(100)** according to claim **4**, wherein one blade **(130, 140, 310, 320, 440, 450)** is fixed, and the other blade **(130, 140, 310, 320, 440, 450)** is movable.

6. The cutting device **(100)** according to claim **5,** wherein at least one movable blade **(310, 320, 440, 450)** performs a pivotable movement.

7. The cutting device **(100)** according to claim **5,** wherein at least one movable blade **(130, 140)** performs a linear movement.

8. The cutting device **(100)** according to any of the claims **5** or **7,** wherein the cutting device **(100)** is a hedge trimmer.

9. The cutting device **(100)** according to any of the claims **5** or **6,** wherein the cutting device **(100)** is scissors.
